# DEMANDE DE BREVET EUROPEEN

(11) **EP 0 738 774 A1**
(43) Date de publication de la demande: **23.10.1996**
(21) Numéro de dépôt: 96400690.2
(22) Date de dépôt: 29.03.1996
(51) Int. Cl.: C09K 5/04

(54) **Mélanges non azéotropiques de 1,1,1,2-tetrafluoroéthane, 1,1,1-trifluoroéthane et pentafluoroéthane, et leur application comme fluides frigorigènes**

(30) Priorité: 20.04.1995 FR 9504725
(71) Demandeur: ELF ATOCHEM S.A., 92800 Puteaux (FR)
(72) Inventeur: Fauvarque, Pierre, 75014 Paris (FR); Macaudiere, Sylvie, 92600 Asnieres (FR)
(74) Mandataire: Leboulenger, Jean

(57) **Abrégé**

Pour remplacer le mélange azéotropique de dichlorodifluorométhane et de 1,1-difluoroéthane (R-500) en réfrigération de transport, l'invention propose d'utiliser un mélange non azéotropique contenant en masse 55 à 65 % de 1,1,1,2-tétrafluoroéthane, 1 à 27 % de 1,1,1 -trifluoroéthane et 10 à 44 % de pentafluoroéthane .

Les propriétés thermodynamiques de ce mélange sont très proches de celles du mélange R-500.

## Description

La présente invention concerne le domaine de la réfrigération et a plus particulièrement pour objet des mélanges non azéotropiques de fluides frigorigènes n'ayant pas ou peu d'action sur l'environnement, pour remplacer les chlorofluorocarbones (CFC) ou hydrochlorofluorocarbones (HCFC) dans les systèmes de réfrigération.

Dans les systèmes exploités en réfrigération de transport, on opère selon un cycle thermodynamique défini généralement par une température d'évaporation pouvant descendre jusqu'à - 35°C, une température de condensation comprise entre 50 et 70°C, un sous-refroidissement liquide de l'ordre de - 5°C et une surchauffe des vapeurs d'au moins 10°C.

Le fluide frigorigène couramment utilisé en réfrigération de transport est le mélange azéotropique (appelé R-500) de dichlorodifluorométhane et de 1,1difluoroéthane. Ce mélange, préféré au dichlorodifluorométhane, permet d'obtenir une excellente capacité frigorifique, tout en gardant des niveaux de pression raisonnables. Or, il est maintenant établi qu'en raison de leur action sur l'ozone, les CFC et HCFC et en particulier le R-500 devront, à plus ou moins longue échéance, être remplacés par des fluides frigorigènes moins agressifs vis-à-vis de l'environnement.

Pour remplacer le R-500 dans les installations de réfrigération, le substitut doit présenter des propriétés thermodynamiques, en particulier une capacité frigorifique et des pressions de fonctionnement aussi proches que possible de celles du R-500. D'autre part, pour la bonne stabilité du produit et la durabilité du matériel, il est souhaitable que la température de refoulement n'excède pas celle du R-500. Enfin, le substitut doit être ininflammable.

Le 1,1,1,2-tétrafluoroéthane (HFC-134a), le 1,1,1-trifluoroéthane (HFC-143a) et le pentafluoroéthane (HFC-125) n'ont comparativement aux composés chlorés aucune action sur l'ozone.

Les HFC-125 et 143a, bien qu'ayant une excellente capacité frigorifique, présentent l'inconvénient majeur d'être des fluides haute pression. De plus, le HFC-143a est un composé inflammable.

Le HFC-134a, composé ininflammable, est un bon fluide frigorigène en terme d'efficacité, mais sa trop faible capacité frigorifique rend son emploi difficile comme substitut au R-500.

Il a maintenant été trouvé que les mélanges contenant en masse environ 55 à 65 % de HFC-134a, 10 à 44 % de HFC-125 et 1 à 27 % de HFC-143a, présentent des propriétés thermodynamiques, en particulier une capacité frigorifique, très proches de celles du R-500 et une tension de vapeur qui n'excède pas de plus de 20 % celle du R-500. De plus, ces mélanges sont ininflammables à 100°C.

Les mélanges selon l'invention peuvent donc être utilisés dans les systèmes de réfrigération de transport. On utilise de préférence les mélanges contenant 58 à 62 % de HFC-134a, 13 à 17 % de HFC-125 et 24 à 26 % de HFC-143a, le mélange tout particulièrement préféré contenant 60 % de HFC-134a, 15 % de HFC-125 et 25 % de HFC-143a.

Les exemples suivants illustrent l'invention sans la limiter.

### EXEMPLE 1

Cet exemple montre que la tension de vapeur des mélanges non azéotropiques de HFC-134a/HFC-125/HFC-143a est proche de celle du R-500 et ce sur une large gamme de température.

Le tableau 1 rassemble les données pour différents mélanges à 25°C et le tableau 2 rassemble les données à différentes températures pour un mélange contenant en masse 60 % de HFC-134a, 15 % de HFC-125 et 25 % de HFC-143a. Cette tension de vapeur ne dépasse pas de plus de 20 % celle du R-500, ce qui est acceptable pour un substitut.

**TABLEAU 1**

| **HFC-134a/HFC-125/HFC-143a (% masse)** | **Pression bulle (bar)** | **Tension vapeur R-500 (bar)** | **Ecart (%)** |
|---|---|---|---|
| 55/40/5 | 8,94 | 7,69 | 16,3 |
| 55/18/27 | 9,21 | 7,69 | 19,8 |
| 65/10/25 | 8,67 | 7,69 | 12,7 |
| 65/30/5 | 8,34 | 7,69 | 8,5 |
| 60/15/25 | 8,92 | 7,69 | 16 |
| 60/30/10 | 8,70 | 7,69 | 13,1 |

**TABLEAU 2**

| **Température (°C)** | **Pression bulle (bar)** | **Tension vapeur R-500 (bar)** | **Ecart (%)** |
|---|---|---|---|
| - 35 | 1,08 | 0,949 | 13,8 |
| - 20 | 2,02 | 1,77 | 14,1 |
| - 5 | 3,51 | 3,06 | 14,7 |
| 20 | 7,74 | 6,68 | 15,9 |
| 35 | 11,7 | 10,01 | 16,9 |
| 50 | 17,0 | 14,43 | 17,8 |
| 65 | 23,9 | 20,13 | 18,9 |

### EXEMPLE 2

Le domaine d'inflammabilité des mélanges HFC-134a/HFC-125/HFC-143a a été déterminé en recherchant le maximum de produit inflammable acceptable dans le mélange pour que ce dernier reste ininflammable.

Cette détermination a été réalisée selon la norme ASTM E681-85 sous pression atmosphérique et à deux températures (25 et 100°C). Le tableau 3 résume les résultats obtenus :

**TABLEAU 3**

| **Fluide dans HFC-143a** | **Maximum HFC-143a (% masse)** | |
|---|---|---|
| | 25°C | 100°C |
| HFC-125 | 63 | 58 |
| HFC-134a | 43,5 | 37,5 |

Le tableau 4 montre l'évolution des compositions des phases vapeur et liquide d'un mélange contenant en masse 60 % de HFC-134a, 15 % de HFC-125 et 25 % de HFC-143a en fonction de la température et du taux de remplissage (15 % et 90 % volume).

**TABLEAU 4**

| **Température (°C)** | **Composition HFC-134a/HFC-125/HFC-143a (% masse)** | | **Taux remplissage (% volume)** |
|---|---|---|---|
| | Phase liquide | Phase vapeur | |
| - 25°C | 60/15/25 | 39,5/21,1/39,4 | 90 |
| 25°C | 60/15/25 | 47,3/19,3/33,4 | 90 |
| 60°C | 60,1/15/24,9 | 52,5/17,7/29,8 | 90 |
| - 25°C | 60,7/14,8/24,5 | 40,1/21/38,9 | 15 |
| 25°C | 62,1/14,3/23,6 | 49,6/18,6/31,9 | 15 |
| 60°C | 62/13,9/23,1 | 55,4/16,6/28 | 15 |

Ces résultats montrent que ce mélange est ininflammable à 100°C sur une large gamme de température et de taux de remplissage.

### EXEMPLE 3

Cet exemple illustre l'utilisation des mélanges de HFC-134a, HFC-125 et de HFC-143a selon l'invention comme fluides frigorigènes.

Les performances thermodynamiques ont été comparées à celle du R-500 pour un cycle thermodynamique standard défini comme suit :
■ Température de condensation : + 50°C
■ Température d'évaporation : - 35°C
■ Température entrée compresseur : 18°C
■ Sous-refroidissement liquide : - 5°C

Le tableau 5 résume les performances thermodynamiques observées dans ces conditions pour différents mélanges de l'invention

**TABLEAU 5**

| **Composition HFC-134a/HFC-125/HFC-143a (% masse)** | **Glissement température évaporateur (K)** | **Capacité frigorifique volumique*** | **Différence température refoulement* (K)** | **COP*** |
|---|---|---|---|---|
| 55/40/5 | 1,7 | 0,924 | - 14 | 0,935 |
| 55/18/27 | 2 | 0,975 | - 10 | 0,935 |
| 65/10/25 | 1,7 | 0,925 | - 9 | 0,945 |
| 65/30/5 | 1,3 | 0,877 | - 12 | 0,95 |
| 60/15/25 | 1,8 | 0,947 | - 10 | 0,94 |
| 60/30/10 | 1,6 | 0,911 | - 12 | 0,945 |

| | | | | |
|---|---|---|---|---|
| * relativement au R-500 | | | | |

.

Le tableau 6 résume les mêmes données, mais pour une température de condensation plus sévère (67°C) et une température d'entrée compresseur de 32°C, les autres conditions étant inchangées.

**TABLEAU 6**

| **Composition HFC-134a/HFC-125/HFC-143a (% masse)** | **Glissement température évaporateur (K)** | **Capacité frigorifique volumique*** | **Différence température refoulement* (K)** | **COP*** |
|---|---|---|---|---|
| 55/40/5 | 1,1 | 0,860 | - 16 | 0,89 |
| 55/18/27 | 1,3 | 0,906 | - 12 | 0,885 |
| 65/10/25 | 1,2 | 0,885 | - 12 | 0,895 |
| 65/30/5 | 0,9 | 0,826 | - 15 | 0,915 |
| 60/15/25 | 1,2 | 0,885 | - 12 | 0,895 |
| 60/30/10 | 1 | 0,853 | - 14,5 | 0,90 |

| | | | | |
|---|---|---|---|---|
| * relativement au R-500 | | | | |

.

## Revendications

1. Mélange non azéotropique contenant en masse 55 à 65 % de 1,1,1,2-tétrafluoroéthane, 1 à 27 % de 1,1,1,-trifluoroéthane et 10 à 44 % de pentafluoroéthane.

2. Mélange selon la revendication 1 contenant en masse 58 à 62 % de 1,1,1,2-tétrafluoroéthane, 24 à 26 % de 1,1,1-trifluoroéthane et 13 à 17 % de pentafluoroéthane.

3. Mélange selon la revendication 1 contenant en masse 60 % de 1,1,1,2-tétrafluoroéthane, 25 % de 1,1,1-trifluoroéthane et 15 % de pentafluoroéthane.

4. Utilisation d'un mélange selon l'une des revendications 1 à 3 comme fluide frigorigène pour la réfrigération.

5. Utilisation d'un mélange selon l'une des revendications 1 à 3 pour remplacer le R-500 en réfrigération de transport.
